(19) Europäisches Patentamt
European Patent Office
Office européen des brevets

(11) **EP 2 439 602 A1**

(12) **EUROPÄISCHE PATENTANMELDUNG**

(43) Veröffentlichungstag:
**11.04.2012 Patentblatt 2012/15**

(51) Int Cl.:
***G05B 17/02*** *(2006.01)*

(21) Anmeldenummer: **10186612.7**

(22) Anmeldetag: **05.10.2010**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **SIEMENS AKTIENGESELLSCHAFT**
**80333 München (DE)**

(72) Erfinder: **Pfeiffer, Bernd-Markus**
**76744, Wörth (DE)**

(54) **Verfahren zum Entwurf eines Prozessreglers**

(57) Die Erfindung betrifft ein Verfahren zum Entwurf eines Prozessreglers (1) für eine Prozessgröße (x), insbesondere einen Druck oder einen Durchfluss, der in einem geschlossenen Regelkreis einer Regelstrecke (3) mit einem Positionierantrieb (20) vorschaltbar ist. Zur Bestimmung der Leistungsfähigkeit des Reglers (1) wird der geschlossene Regelkreis simuliert. Dabei wird einem simulierten Verlauf des Istwerts der Prozessgröße (x) ein vorbestimmtes Rauschen (xm) aufaddiert, welches vorzugsweise durch Messen an einem realen Positionierantrieb (20) erhalten wurde. Zur Ermittlung eines Schätzwerts (10) für den Energieverbrauch des Antriebs (20) wird der simulierte Verlauf der Stellgröße (u) des Prozessreglers (1) ausgewertet. Damit ist es möglich, bei der Reglereinstellung einen Kompromiss zwischen der Regler-Performance bezüglich Stör- und Führungsverhalten und dem abgeschätzten Energieverbrauch zu finden, ohne dass eine direkte Messung des Energieverbrauchs an einem realen Antrieb erforderlich wäre.

FIG 1

EP 2 439 602 A1

**Beschreibung**

Die Erfindung betrifft ein Verfahren zum Entwurf eines Prozessreglers für eine Prozessgröße, insbesondere einen Druck oder einen Durchfluss, der in einem geschlossenen Regelkreis einer Regelstrecke, die einen Positionierantrieb enthält, vorschaltbar ist, gemäß dem Oberbegriff des Anspruchs 1.

Viele PID-Regler werden in der Praxis durch mehr oder weniger systematisches Probieren, bestenfalls mittels heuristischer Einstellregeln, eingestellt, wobei der D-Anteil des PID-Reglers häufig gar nicht genutzt wird. Eine Optimierung durch reines Probieren ist jedoch sehr zeitaufwendig.

Zunehmend setzt sich daher der Einsatz von rechnergestützten Verfahren zum Entwurf von Prozessreglern durch, beispielsweise mittels des so genannten PID-Tuners, der in das Engineering-System des bekannten Prozessleitsystems SIMATIC PCS 7 integriert ist. Die Bestimmung günstiger Reglerparameter, die neben der Auswahl eines geeigneten Reglertyps einen wichtigen Schritt des Reglerentwurfs darstellt, kann durch eine Vorgehensweise erfolgen, bei der vom entsprechenden Software-Tool des PID-Tuners zur Regleroptimierung zunächst ein Modell der Regelstrecke gebildet wird. Dazu wird der Prozess entweder durch einen Stellgrößensprung im Handbetrieb des Reglers oder, falls bereits eine grobe, zumindest stabile Reglerauslegung vorliegt, durch einen Sollwertsprung im Automatikbetrieb angeregt. Aus den dabei ermittelten Messdaten wird ein dynamisches Prozessmodell identifiziert, d. h., Struktur und Parameter eines Prozessmodells werden so bestimmt, dass die Messdaten möglichst gut durch Daten des Prozessmodells angenähert werden. Auf Basis des identifizierten Prozessmodells erfolgt die Bestimmung günstiger Reglerparameter eines PID-Reglers beispielsweise nach dem Verfahren des Betragsoptimums. Zur Beurteilung der Leistungsfähigkeit des so erhaltenen Reglers kann der geschlossene Regelkreis mit dem erhaltenen Regler simuliert werden. Dabei erhaltene Verläufe von Regeldifferenz oder Istwert des Regelkreises werden auf einer grafischen Bedienoberfläche ausgegeben, so dass eine visuelle Beurteilung beispielsweise des Störverhaltens oder des Führungsverhaltens vorgenommen werden kann. Zudem werden zur weitergehenden Optimierung durch den Bediener verschiedene Reglertypen und Parametrierungen des Reglers zur Durchführung erneuter Simulationsrechnungen angeboten. Nach Auswahl der am besten geeigneten Einstellung des Reglers ist der Reglerentwurf abgeschlossen.

Ein weiteres Verfahren zum rechnergestützten Entwurf und zur Inbetriebnahme von Reglern ist in der DE 100 46 005 A1 beschrieben.

Viele Regelkreise in verfahrenstechnischen Anlagen, insbesondere Durchfluss- und Druckregelkreise, verwenden Stetigventile als Aktoren, die mit oder ohne unterlagerte Positionsregelung von einem elektropneumatischen Stellantrieb bewegt werden. Falls der Stellantrieb einen internen Positionsregelkreis aufweist, handelt es sich um eine Kaskadenstruktur mit dem Prozessregler (z. B. Druck- oder Durchflussregler) als Führungsregler und dem meist im Feldgerät integrierten Positionsregler als Folgeregler. Pneumatische Positionierantriebe haben dabei den Vorteil, dass sie vergleichsweise schnell betätigt werden können und hohe Stellkräfte erreichen. Weiter sind sie meist unkritisch im Bereich explosionsgefährdeter Umgebungen, im Außeneinsatz und bei niedrigen Temperaturen. In verfahrenstechnischen Anlagen gehört Druckluft allerdings zu den teuersten Energieträgern, weil die Druckluftbereitstellung mit Kompressoren einen schlechten Wirkungsgrad hat und weil in den weitverzweigten Pneumatik-Rohrleitungsnetzen Druckverluste und eventuell Leckagen auftreten. Der Druckluftverbrauch einzelner pneumatischer Antriebe wird jedoch nicht gemessen, da dies mit einem vergleichsweise hohen Aufwand verbunden wäre. Auch bei vielen anderen Antrieben, beispielsweise elektromotorischen Antrieben, wird meist auf eine gesonderte Messstelle zur direkten Erfassung ihres Energieverbrauchs verzichtet, da diese immer mit einem gewissen Aufwand verbunden ist. Der Energieverbrauch der Antriebe ist in jedem Fall deutlich abhängig von der Einstellung des jeweils zugeordneten Prozessreglers. Da der Verbrauch in den meisten Fällen aus den oben genannten Gründen nicht direkt messtechnisch erfasst wird, bleibt er häufig beim Reglerentwurf unberücksichtigt und es werden Reglereinstellungen erhalten, die zwar bezüglich Stör- und Führungsverhalten den Anforderungen genügen, jedoch oft einen unnötig hohen Energieverbrauch der Antriebe zur Folge haben.

Der Erfindung liegt die Aufgabe zugrunde, ein Verfahren zum Entwurf eines Prozessreglers, der einem Positionierantrieb vorgeschaltet ist, zu finden, bei welchem zusätzlich zur Leistungsfähigkeit des Reglers bezüglich Stör- und Führungsverhalten der Energieverbrauch des Positionierantriebs berücksichtigt werden kann.

Zur Lösung dieser Aufgabe weist das neue Verfahren der eingangs genannten Art die im kennzeichnenden Teil des Anspruchs 1 angegebenen Merkmale auf. In den abhängigen Ansprüchen sind Weiterbildungen des Verfahrens, ein Computerprogramm und ein Computerprogrammprodukt beschrieben.

In vorteilhafter Weise wird für die Abschätzung des Energieverbrauchs des Antriebs von einem vorbestimmten Rauschen der Prozessgröße, insbesondere des Drucks oder des Durchflusses, ausgegangen. Dieses Rauschen entspricht vorzugsweise den Schwankungen des Istwerts der Prozessgröße im stationären Zustand, d. h. bei konstantem Sollwert und abgeschlossenem Einschwingvorgang. Dieser Zustand entspricht der am häufigsten in einer verfahrenstechnischen Anlage auftretenden Situation. Bei der Simulation des geschlossenen Regelkreises wird in vorteilhafter Weise die Reaktion des Reglers auf dieses Rauschen ermittelt, indem das vorbestimmte Rauschen zum simulierten Istwert oder zu der auf den Regler geführten Regeldifferenz hinzuaddiert wird.

Aus den technischen Daten von Positionierantrieben oder durch empirische Versuche kann der jeweils antriebsspezifische Zusammenhang zwischen den durch den Antrieb bewirkten Positionsänderungen und dem jeweils damit verbundenen Energieverbrauch ermittelt werden. Da der Verlauf der Stellgröße, welcher bei einer Kaskadenstruktur dem Verlauf des auf den internen Positionsregelkreis des Antriebs gegebenen Positions-Sollwerts entspricht, zur Ermittlung eines Schätzwerts für den Energieverbrauch des Antriebs ausgewertet wird, kann somit in vorteilhafter Weise auf eine Messung der Leistungsaufnahme des Antriebs, die mit einem vergleichsweise hohen Aufwand verbunden wäre, verzichtet werden. Dabei wird davon ausgegangen, dass ein eventuell vorhandener, feldgeräteinterner Positionsregelkreis korrekt arbeitet, so dass der Signalverlauf des Positions-Istwerts in guter Näherung dem Verlauf des Positions-Sollwerts entspricht. Bereits mit dem bekannten PID-Tuner können Simulationen des geschlossenen Regelkreises mit verschiedenen Reglertypen, z. B. P-, PI-oder PID-Regler, und verschiedenen Reglerparametern durchgeführt werden. Mit Hilfe des neuen Verfahrens kann nun zusätzlich zur grafischen Darstellung der simulierten Signalverläufe im Regelkreis ein Schätzwert für den damit verbundenen Energieverbrauch angezeigt werden. In vorteilhafter Weise müssen somit beim Reglerentwurf keine Entscheidungen mehr getroffen werden, deren dauerhafte Auswirkungen auf den ständigen Energieverbrauch im Betrieb einer verfahrenstechnischen Anlage nicht abschätzbar wären. Vielmehr wird nun der Energieverbrauch bei der Reglerauslegung berücksichtigt. Der Anwender kann im vollen Bewusstsein der durch den geschätzten Energieverbrauch verursachten Kosten zwischen verschiedenen möglichen Reglerentwürfen entscheiden.

In einer besonders vorteilhaften Ausgestaltung des Verfahrens wird das Rauschen durch Messen des Istwertverlaufs der Prozessgröße an einer realen Regelstrecke mit unterlagertem Positionsregelkreis des Positionierantriebs im stationären Zustand vorbestimmt. Ein derartiges Rauschen ist ein Maß für Störungen und Messrauschen im Regelkreis und Auswirkungen des Rauschens auf den Verlauf des Positions-Sollwerts, d. h. in diesem Fall der Stellgröße, werden realistisch dargestellt. Dabei bietet es sich an, die Abweichung des real gemessenen Istwerts vom Mittelwert zu verwenden.

In einer vorteilhaften Weiterbildung wird bei der Simulation der Verlauf des Positions-Sollwerts zusätzlich zur Ermittlung eines Schätzwerts für den Verschleiß des Antriebs ausgewertet. Damit können beim Reglerentwurf zudem die Auswirkungen der Reglereinstellung auf die Antriebslebensdauer berücksichtigt werden. Somit kann der Anwender auch anhand der prognostizierten Ventillebensdauer zwischen verschiedenen möglichen Reglerentwürfen sinnvoll auswählen.

Ein Software-Werkzeug zur Optimierung des Regelkreises wird vorzugsweise so gestaltet, dass zwei oder mehr verschiedene Reglereinstellungen auf einer beispielsweise grafischen Anzeige direkt miteinander verglichen werden können, und zwar sowohl hinsichtlich des Signalverlaufs zur Beurteilung von Stör- und Führungsverhalten als auch hinsichtlich des zu erwartenden Energieverbrauchs. Dazu wird der geschlossene Regelkreis für mehrere verschiedene Reglereinstellungen simuliert und die dabei ermittelten Schätzwerte des Energieverbrauchs werden auf einer Anzeige lesbar für einen Bediener ausgegeben.

Alternativ dazu kann der Energieverbrauch selbstverständlich in einem geeignet definierten Performance-Index bei einem automatischen Reglerentwurf berücksichtigt werden, ohne dass zusätzliche Eingriffe eines Bedieners notwendig wären.

Besonders vorteilhaft ist das neue Verfahren anzuwenden bei einem pneumatischen Antrieb für ein Regelventil, wobei zur Ermittlung des Schätzwerts des Energieverbrauchs die für den Verlauf des Positions-Sollwerts aufzuwendende mechanische Leistung berechnet wird. Die Möglichkeit, ohne eine direkte Messung des Energieverbrauchs des Antriebs auszukommen, ist hier besonders bedeutsam, da der Druckluftverbrauch des pneumatischen Antriebs ansonsten nur mit einem vergleichsweise hohen Aufwand erfassbar wäre.

Eine Weiterbildung des Verfahrens, bei welcher der Schätzwert des Energieverbrauchs durch Verknüpfung der berechneten mechanischen Leistung mit einem vorbestimmten Wirkungsgrad des pneumatischen Antriebs und des vorbekannten Wirkungsgrads eines elektrischen Kompressors zur Drucklufterzeugung ermittelt wird, hat den Vorteil, dass die verschiedenen Verluste in der Kette der Energiewandlung mit berücksichtigt und damit ein weiter verbesserter Reglerentwurf erzielt werden.

Anhand der Zeichnungen, in denen ein Ausführungsbeispiel der Erfindung dargestellt ist, werden im Folgenden die Erfindung sowie Vorteile und Ausgestaltungen näher erläutert.

Es zeigen:

Figur 1     ein Funktionsschaltbild eines Simulationsmodells und

Figur 2     ein pneumatisches Ventil mit einem vorgeschalteten Stellungsregler.

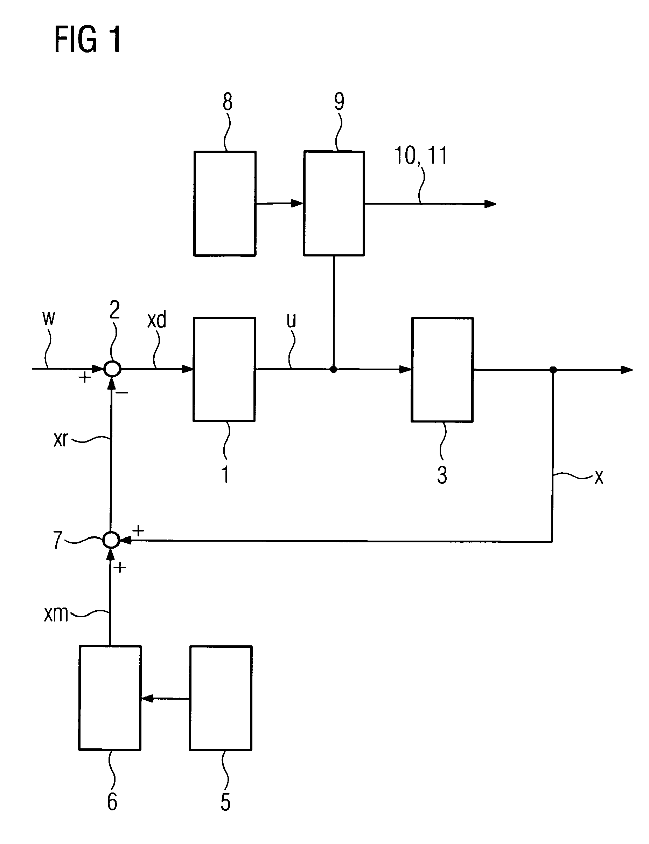

Im Rahmen des rechnergestützten Entwurfs eines Prozessreglers 1 wird durch ein Computerprogramm, welches beispielsweise auf einem Personal Computer abläuft, der geschlossene Regelkreis simuliert, dessen prinzipielle Funktionsblöcke in Figur 1 dargestellt sind. Bereits mit dem bekannten PID-Tuner kann ein Regelkreis, bestehend aus einer Vergleichseinrichtung 2, dem Regler 1 und der Strecke 3, simuliert werden. Mit Hilfe der Vergleichseinrichtung 2 wird aus einem vorgebbaren Sollwert w und einem am Ausgang der Strecke 3 durch Simulation berechneten Istwert x eine Regeldifferenz xd berechnet, welche auf den Eingang des Reglers 1 geführt ist. Abhängig von dem berechneten Verlauf der Regeldifferenz xd ermittelt der Regler 1 einen geeigneten Verlauf einer Stellgröße u für die Regelstrecke 3. Beispielsweise kann durch Aufschalten einer Sprungfunktion als Verlauf des Sollwerts w anhand des sich dabei einstellenden Verlaufs des Istwerts x die Leistungsfähigkeit des Reglers 1 bezüglich Führungsverhalten bewertet werden. Durch Simulation des geschlossenen Regelkreises wird die Performance des Reglers 1 überprüft, bevor ein neu entworfener Regler in einer verfahrenstechnischen Anlage zum Einsatz kommt.

Damit das zur Simulation verwendete Modell der Regelstrecke 3 gut mit dem realen Prozess übereinstimmt, liegen weiterhin im Tuning-Werkzeug, beispielsweise dem PID-Tuner, Lerndaten des realen Prozesses vor, die zur Prozessidentifikation verwendet werden.

Die Simulation des geschlossenen Regelkreises wird nun um eine Abschätzung des Energieverbrauchs eines Positionierantriebs, der ein Bestandteil der Regelstrecke 3 ist, erweitert. Wegen des damit verbundenen Aufwands ist es in verfahrenstechnischen Anlagen üblicherweise nicht möglich, den Energieverbrauch von Positionierantrieben, die elektromotorisch, hydraulisch oder insbesondere pneumatisch betrieben werden können, direkt zu messen. Die Abschätzung des Energieverbrauchs bereits bei der Simulation des Regelkreises ermöglicht es nun, bei der Reglereinstellung einen bewussten Kompromiss zwischen Regler-Performance bezüglich Stör- und/oder Führungsverhalten und dem Energieverbrauch des Positionierantriebs zu finden.

Eine Abweichung xm des real gemessenen Istwerts vom Mittelwert im stationären Zustand ist ein Maß für Störungen und Messrauschen im realen Regelkreis. Für die Simulation wird ein repräsentativer Zeitausschnitt eines Verlaufs dieser Abweichungen xm als zusätzliche Lerndaten des realen Prozesses erfasst und in einem Speicher 5 hinterlegt. Durch eine Einrichtung 6 wird dieser Zeitausschnitt für die Simulation zyklisch wiederholt auf einen Summierer 7 gegeben und dort dem simulierten Istwert x zur Bildung eines verrauschten Istwerts xr aufaddiert. Die Regeldifferenz xd wird folglich als Differenz des Sollwerts w und des verrauschten Istwerts xr berechnet. Durch die Überlagerung des vorbestimmten Rauschens xm zum simulierten Istwert x der Prozessgröße erhält man in vorteilhafter Weise ein Simulationsergebnis, welches auch die Auswirkungen des Rauschens xm auf den Verlauf des Stellsignals u, welcher bei einer Kaskadenstruktur dem Verlauf des auf den internen Positionsregelkreis des Antriebs gegebenen Positions-Sollwerts entspricht, realistisch darstellt.

Es liegt auf der Hand, dass alternativ zum beschriebenen Ausführungsbeispiel der Ort der additiven Überlagerung in äquivalenter Weise an anderer Stelle erfolgen kann, beispielsweise hinter der Vergleichseinrichtung 2, so dass Werte der Abweichungen xm als vorbestimmtes Rauschen zu Werten der Regeldifferenz xd aufaddiert werden.

Als weitere Lerndaten sind in einem Speicher 8 Kenndaten des Positionierantriebs, der Bestandteil der Regelstrecke 3 ist, hinterlegt, welche beispielsweise anhand seiner technischen Daten abgeleitet oder durch Messungen an einem vergleichbaren Positionierantrieb ermittelt wurden. Anhand dieser Kenndaten berechnet eine Einrichtung 9 einen Schätzwert 10 für den Energieverbrauch des Positionierantriebs, der durch den Verlauf der simulierten Stellgröße u bewirkt wird.

In einem Tuning-Werkzeug, welches durch ein auf einem Rechner ablaufendes Computerprogramm realisiert ist, können mit verschiedenen Reglertypen, z. B. PID-, PI- oder P-Regler, und verschiedenen Reglerparametern Simulationen durchgeführt werden. Zusätzlich zur grafischen Darstellung der simulierten Verläufe der im Regelkreis vorhandenen Signale, die insbesondere zur Beurteilung von Stör- und Führungsverhalten durch einen Bediener hilfreich ist, wird der Schätzwert 10 des Energieverbrauchs als weitere Größe zur Beurteilung der Leistungsfähigkeit des Reglers 1 angezeigt. Vorteilhaft kann das Tuning-Werkzeug derart ausgestaltet sein, dass zwei verschiedene Reglereinstellungen direkt miteinander verglichen werden können, und zwar sowohl hinsichtlich der Signalverläufe als auch hinsichtlich des jeweiligen Energieverbrauchs. Die für die Berechnung des Schätzwerts 10 für den Energieverbrauch ausgewerteten Verläufe der simulierten Stellgröße u können in vorteilhafter Weise zusätzlich zur Abschätzung einer Lebensdauer 11 des Positionierantriebs in Abhängigkeit der Reglereinstellung herangezogen werden. Damit kann der Verschleiß des Positionierantriebs als weiteres Kriterium beim Reglerentwurf berücksichtigt werden.

Das neue Tuning-Werkzeug ermöglicht somit eine Schätzung des Energieverbrauchs im Rahmen der bei einer rechnergestützten Reglerinbetriebnahme ohnehin durchgeführten Simulationen, so dass auf eine aufwendige Messung des Energieverbrauchs an einzelnen Positionierantrieben verzichtet werden kann. Auf der Basis des geschätzten Energieverbrauchs und eventuell auch der prognostizierten Lebensdauer des Positionierantriebs kann sich der Anwender im Bewusstsein der dadurch verursachten Kosten zwischen verschiedenen möglichen Reglereinstellungen entscheiden.

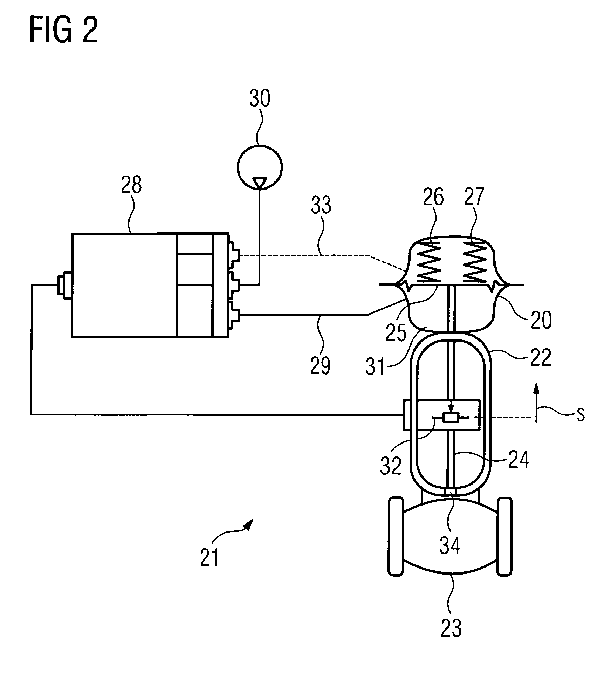

Die Erfindung ist besonders vorteilhaft anwendbar bei einem pneumatischen Antrieb 20 als Bestandteil eines Regelventils 21, dessen prinzipieller Aufbau in Figur 2 dargestellt ist. Der Antrieb 20 ist über ein Joch 22 mit einem Ventil 23 verbunden und stellt mit Hilfe einer Schubstange 24 die Position s eines in Figur 2 nicht näher dargestellten Schließkörpers im Ventil 23 ein. Im gezeigten Ausführungsbeispiel handelt es sich um einen einfach wirkenden Antrieb 20, bei welchem oberhalb einer Membran 25 Federn 26, 27 angeordnet sind, welche eine Federkraft auf die Membran 25 ausüben. Ein Stellungsregler 28, welchem in einer Kaskadenstruktur die Stellgröße u (Figur 1) als Positions-Sollwert zugeführt ist, schaltet über eine Leitung 29 von einem Kompressor 30 gelieferte Druckluft in die unter der Membran 25 befindliche Druckkammer 31, um eine mit einem Positionsgeber 32 erfasste Position s auf einen gewünschten Wert einzustellen.

Handelt es sich abweichend vom gezeigten Ausführungsbeispiel um einen doppelt wirkenden pneumatischen Antrieb, so würden die Federn 26, 27 entfallen und der Stellungsregler 28 wäre zusätzlich mit einer Leitung 33, die mit durchbrochenen Linien eingezeichnet ist, mit einer oberen Kammer des pneumatischen Antriebs 20 verbunden.

Im Folgenden wird die Vorgehensweise bei der Schätzung des Energieverbrauchs beispielhaft für den in Figur 2 gezeigten einfach wirkenden pneumatischen Antrieb 20 näher erläutert. Da in verfahrenstechnischen Anlagen häufig keine kostengünstige und praktikable Messung für den Druckluftverbrauch einzelner pneumatischer Antriebe 20 zur Verfügung steht, wird der Druckluftverbrauch, mit welchem Bewegungen der Schubstange 24 um einen Weg ds verbunden sind, abgeschätzt. Ausgangspunkt der Schätzung ist der erforderliche Bedarf an mechanischer Energie W zur Bewegung der Schubstange 24 entlang des Weges ds gegen eine Kraft F gemäß der Formel:

$$W = \int_{|\dot{s}|>0} F(s)\,ds \; .$$

Beim einfach wirkenden Antrieb 20 wird das Ventil durch Federkraft geschlossen und durch Druckluft in der Druckkammer 31 geöffnet. Es müssen also nur die Wegstrecken aufintegriert werden, die gegen die Richtung der Federkraft verlaufen, d. h. $|\dot{s}|>0$. Es muss dabei Arbeit gegen die Kraft der Federn 26, 27, welche in Summe eine Federkonstante D aufweisen, und gegen eine Reibkraft $F_R$ verrichtet werden. Es gilt:

$$F(s) = Ds + F_0 + F_R \; .$$

In dieser Gleichung wird angenommen, dass bereits im geschlossenen Zustand des Ventils bei s = 0 eine Vorspannung der Federn 26, 27 mit der Kraft $F_0$ wirkt, die dazu dient, das Ventil 23 geschlossen zu halten.

Dabei wird in erster Näherung die Kraft vernachlässigt, die zur Beschleunigung der beweglichen Massen des Regelventils 21 aufgewendet werden muss, da diese beim anschließenden Bremsvorgang wieder frei wird. Außerdem wird die Gewichtskraft des Schließkörpers vernachlässigt, da diese üblicherweise gegenüber der Federkraft klein ist und von der Einbaulage des Ventils abhängt. Rückwirkungen des durch das Ventil 23 strömenden Fluids auf den Schließkörper sind schlecht vorhersehbar und werden bei der beschriebenen Abschätzung ebenfalls vernachlässigt. Die Reibkraft $F_R$ entsteht überwiegend in einer Stopfbuchsendichtung 34 des Regelventils 21 und wird in erster Näherung als konstant und geschwindigkeitsunabhängig angenommen. Damit berechnet sich die mechanische Energie W zu:

$$W = \int_{|\dot{s}|>0} \left(Ds + F_0 + F_R\right)ds = D \int_{|\dot{s}|>0} s\,ds + \left(F_0 + F_R\right)\int_{|\dot{s}|>0} ds \; .$$

Bei der Simulation liegt der Verlauf der simulierten Stellgröße u (Figur 1), welche beim pneumatischen Regelventil 21 gemäß Figur 2 die Position s vorgibt, in Form von Abtastwerten vor, die für diskrete Zeitpunkte berechnet sind. Die Schubstange 24 und damit der Schließkörper im Ventil 23 legen dabei in einem Abtastintervall den Weg Δs zurück. Daher wird die Integration zur Berechnung des Schätzwerts 10 (Figur 1) durch eine Summation ersetzt:

$$W = D \sum_{\Delta s>0} s\,\Delta s + \left(F_0 + F_R\right)\sum_{\Delta s>0} \Delta s \; .$$

Nach Aufsummieren der mechanischen Arbeit in einem Simulationszeitfenster der vorbestimmten Länge T erhält man die durchschnittlich aufgewendete mechanische Leistung P, d. h. den Energieverbrauch, als Entscheidungsgrundlage für den Reglerentwurf zu

$$P = \frac{W}{T}.$$

Die Auswertung des Verlaufs der simulierten Stellgröße u (Figur 1) zur Ermittlung eines Schätzwerts für den Energieverbrauch wurde anhand des in Figur 2 dargestellten Beispiels eines pneumatischen Antriebs 20 für ein Regelventil 21 ausführlich beschrieben. Handelt es sich abweichend vom gezeigten Ausführungsbeispiel bei einem Positionierantrieb um einen elektrisch oder hydraulisch betriebenen Antrieb oder um einen doppelt wirkenden pneumatischen Antrieb, können die oben angegebenen Gleichungen und die zur Abschätzung verwendeten Kennwerte ohne weiteres durch geeignete Berechnungsmethoden entsprechend den dort herrschenden physikalischen Gegebenheiten ersetzt werden.

Falls bei dem in Figur 2 gezeigten Regelventil 21 der Wirkungsgrad des Kompressors 30 bekannt ist und Druckverluste bzw. Leckagen im pneumatischen Leitungsnetz der verfahrenstechnischen Anlage grob abgeschätzt oder vernachlässigt werden können, kann der oben bestimmte Schätzwert für den Verbrauch an mechanischer Energie zudem auf einen elektrischen Energieverbrauch beim Betrieb des Kompressors 30 umgerechnet werden. In vielen Fällen können die mit dem Energieverbrauch verbundenen Kosten auf diese Weise besser miteinander verglichen werden.

Zur Beurteilung des Verschleißes des Regelventils 21, der sich bei den verschiedenen Reglereinstellungen ergibt, kann in einfacher Weise die Summe der in den Abtastintervallen eines Simulationslaufs zurückgelegten Wege Δs berechnet werden.

**Patentansprüche**

1. Verfahren zum Entwurf eines Prozessreglers (1) für eine Prozessgröße (x), insbesondere einen Druck oder einen Durchfluss, der in einem geschlossenen Regelkreis einer Regelstrecke (3) mit einem Positionierantrieb (20) vorschaltbar ist, wobei der geschlossene Regelkreis zur Bestimmung der Leistungsfähigkeit des Reglers simuliert wird, **dadurch gekennzeichnet, dass** bei der Simulation des geschlossenen Regelkreises zu einem simulierten Verlauf des Istwerts der Prozessgröße (x), des Sollwerts (w) oder der Regeldifferenz (xd) ein vorbestimmtes Rauschen (xm) aufaddiert und ein simulierter Verlauf der Stellgröße (u) des Prozessreglers zur Ermittlung eines Schätzwerts (10) für den Energieverbrauch des Antriebs (20) ausgewertet wird.

2. Verfahren nach Anspruch 1, **dadurch gekennzeichnet, dass** das Rauschen (xm) in Abhängigkeit einer Messung des Istwertverlaufs der Prozessgröße an einem realen Positionierantrieb im stationären Zustand vorbestimmt ist.

3. Verfahren nach Anspruch 1 oder 2, **dadurch gekennzeichnet, dass** bei der Simulation der simulierte Verlauf der Stellgröße (u) des Prozessreglers zur Ermittlung eines Schätzwerts (11) für den Verschleiß des Antriebs (20) ausgewertet wird.

4. Verfahren nach einem der vorhergehenden Ansprüche, **dadurch gekennzeichnet, dass** der geschlossene Regelkreis für mehrere verschiedene Reglereinstellungen simuliert wird und dass die dabei ermittelten Schätzwerte (10) des Energieverbrauchs auf einer Anzeige lesbar für einen Bediener ausgegeben werden.

5. Verfahren nach einem der vorhergehenden Ansprüche, **dadurch gekennzeichnet, dass** der Positionierantrieb ein pneumatischer Antrieb (20) für ein Regelventil (21) ist und dass zur Ermittlung des Schätzwerts (10) des Energieverbrauchs die für den Verlauf der Stellgröße (u) aufzuwendende mechanische Leistung berechnet wird.

6. Verfahren nach Anspruch 5, **dadurch gekennzeichnet, dass** der Schätzwert des Energieverbrauchs durch Verknüpfung der berechneten mechanischen Leistung mit einem vorbestimmten Wirkungsgrad des pneumatischen Antriebs (20) und eines elektrischen Kompressors (30) zur Drucklufterzeugung ermittelt wird.

7. Computerprogramm mit durch einen Computer ausführbaren Programmcodeanweisungen zur Implementierung des Verfahrens nach einem der Ansprüche 1 bis 6, wenn das Computerprogramm auf einem Computer ausgeführt wird.

8. Computerprogrammprodukt, insbesondere Speichermedium, mit einem durch einen Computer ausführbaren Computerprogramm gemäß Anspruch 7.

FIG 1

# FIG 2

Europäisches Patentamt
European Patent Office
Office européen des brevets

## EUROPÄISCHER RECHERCHENBERICHT

Nummer der Anmeldung

EP 10 18 6612

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 0 793 155 A2 (NELES JAMESBURY OY [FI] METSO AUTOMATION OY [FI]) 3. September 1997 (1997-09-03) * Spalte 3, Zeile 47 - Spalte 4, Zeile 35 * ----- | 1 | INV. G05B17/02 |
| A,D | DE 100 46 005 A1 (SIEMENS AG [DE]) 4. April 2002 (2002-04-04) * Absatz [0004] * ----- | 1 | |

RECHERCHIERTE SACHGEBIETE (IPC)

G05B

Der vorliegende Recherchenbericht wurde für alle Patentansprüche erstellt

| Recherchenort | Abschlußdatum der Recherche | Prüfer |
|---|---|---|
| Den Haag | 28. März 2011 | Kelperis, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                       
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 18 6612

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-03-2011

| Im Recherchenbericht angeführtes Patentdokument | | Datum der Veröffentlichung | Mitglied(er) der Patentfamilie | | Datum der Veröffentlichung |
|---|---|---|---|---|---|
| EP 0793155 | A2 | 03-09-1997 | DE<br>DE<br>US | 69627297 D1<br>69627297 T2<br>5992229 A | 15-05-2003<br>09-10-2003<br>30-11-1999 |
| DE 10046005 | A1 | 04-04-2002 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 10046005 A1